# EUROPEAN PATENT APPLICATION

(11) **EP 4 730 124 A1**
(43) Date of publication of application: **22.04.2026**
(21) Application number: 24842001.0
(22) Date of filing: 19.04.2024
(51) Int. Cl.: G06F 9/455

(54) **RESOURCE ISSUING METHOD AND APPARATUS, AND COMPUTING DEVICE CLUSTER**

(30) Priority: 14.07.2023 CN 202310868423; 28.03.2024 CN 202410369953
(71) Applicant: Huawei Cloud Computing Technologies Co., Ltd., Guiyang, Guizhou, 550025 (CN)
(72) Inventor: HOU, Boyi, Guiyang, Guizhou 550025 (CN); SU, Li, Guiyang, Guizhou 550025 (CN); ZHOU, Mosong, Guiyang, Guizhou 550025 (CN); ZHOU, Wenli, Guiyang, Guizhou 550025 (CN)
(74) Representative: Goddar, Heinz J.
(86) International application number: PCT/CN2024/088906
(87) International publication number: WO 2025/016001

(57) **Abstract**

This application discloses a resource provisioning method and apparatus, and a computing device cluster, relating to the field of cloud computing technologies. The method includes: obtaining a first resource request, where the first resource request includes a first resource type of a first virtual resource that is requested to be provisioned; determining, in a plurality of physical resources, at least one physical resource on which a virtual resource of the first resource type is deployed; obtaining a provisioning priority of the at least one physical resource for the virtual resource of the first resource type, where the provisioning priority indicates a provisioning sequence of the at least one physical resource for the virtual resource of the first resource type; and controlling, based on the provisioning priority, the at least one physical resource to provision the first virtual resource. The provisioning priority of the at least one physical resource for the virtual resource of the first resource type is obtained, and the at least one physical resource is controlled, based on the provisioning priority, to provision the first virtual resource, so that flexible provisioning of the first virtual resource can be implemented.

## Description

This application claims priorities to Chinese Patent Application No. 202310868423.4, filed on July 14, 2023 and entitled "VIRTUAL RESOURCE SUPPLY METHOD, APPARATUS, AND COMPUTING DEVICE CLUSTER", and to Chinese Patent Application No. 202410369953.9, filed on March 28, 2024 and entitled "RESOURCE PROVISIONING METHOD AND APPARATUS, AND COMPUTING DEVICE CLUSTER", both of which are incorporated herein by reference in their entireties.

### TECHNICAL FIELD

This application relates to the field of cloud computing technologies, and in particular, to a resource provisioning method and apparatus, and a computing device cluster.

### BACKGROUND

In the field of cloud computing technologies, a plurality of cloud services are implemented by virtual machines. The virtual machine is a software-simulated computer system, and provides various cloud services for users by using virtual resources. The virtual resources are provisioned by physical resources, and the virtual machine depends on the provisioned virtual resources for its creation and operating.

### SUMMARY

This application provides a resource provisioning method and apparatus, and a computing device cluster, to implement flexible resource provisioning. Technical solutions are as follows:
According to a first aspect, a resource provisioning method is provided, where the method is applied to a cloud management platform, and the cloud management platform is configured to manage a plurality of physical resources. The method includes: obtaining a first resource request, where the first resource request includes a first resource type of a first virtual resource that is requested to be provisioned; determining, from the plurality of physical resources, at least one physical resource on which a virtual resource of the first resource type is deployed; obtaining a provisioning priority of the at least one physical resource for the virtual resource of the first resource type, where the provisioning priority indicates a provisioning sequence of the at least one physical resource for the virtual resource of the first resource type; and controlling, based on the provisioning priority, the at least one physical resource to provision the first virtual resource.

According to the method provided in this application, after it is determined that the virtual resource of the first resource type is deployed on the at least one physical resource, the provisioning priority of the at least one physical resource for the virtual resource of the first resource type is obtained, and the at least one physical resource is controlled to provision the first virtual resource based on the provisioning priority indicating the provisioning sequence of the at least one physical resource for the virtual resource of the first resource type, so that flexible provisioning of the first virtual resource can be implemented.

In a possible implementation, a provisioning priority of any physical resource in the at least one physical resource for the virtual resource of the first resource type is determined based on at least one of a provisioning benefit or a remaining capacity of the any physical resource, the provisioning benefit of the any physical resource is a benefit of provisioning the virtual resource of the first resource type by the any physical resource, and the remaining capacity of the any physical resource is an amount of the any physical resource still available for provisioning the virtual resource of the first resource type. The provisioning priority of the at least one physical resource for the virtual resource of the first resource type can be accurately determined based on at least one of the provisioning benefit or the remaining capacity of the at least one physical resource, so that flexible resource provisioning can be implemented based on the provisioning priority.

In a possible implementation, the provisioning priority of the any physical resource for the virtual resource of the first resource type is positively correlated with the provisioning benefit of the any physical resource; and the provisioning priority of the any physical resource for the virtual resource of the first resource type is positively correlated with the amount of the remaining capacity of the any physical resource, or the provisioning priority of the any physical resource for the virtual resource of the first resource type is positively correlated with a remaining capacity proportion of the any physical resource, where the remaining capacity proportion of the any physical resource is a proportion of the remaining capacity of the any physical resource used for provisioning the virtual resource of the first resource type to a total capacity.

A larger provisioning benefit of the any physical resource for the virtual resource of the first resource type indicates a larger benefit that can be obtained by provisioning the virtual resource of the first resource type by the physical resource. Therefore, the provisioning priority of the any physical resource for the virtual resource of the first resource type is positively correlated with the provisioning benefit of the any physical resource, so that a physical resource with a larger benefit can preferentially provision the virtual resource of the first resource type, and more benefits can be obtained.

In addition, a larger remaining capacity of the any physical resource for the virtual resource of the first resource type indicates a larger quantity of virtual resources that are of the first resource type and that can be provisioned by the physical resource. Therefore, the provisioning priority of the any physical resource for the virtual resource of the first resource type is positively correlated with the remaining capacity of the any physical resource, so that a physical resource with a larger remaining capacity can preferentially provision the virtual resource of the first resource type, and a requirement of a large quantity of resources can be more easily satisfied.

Alternatively, a larger remaining capacity proportion of the any physical resource for the virtual resource of the first resource type indicates a larger relative quantity of virtual resources that are of the first resource type and that can be provisioned by the physical resource based on the remaining capacity. Therefore, the provisioning priority of the any physical resource for the virtual resource of the first resource type is positively correlated with the remaining capacity proportion of the any physical resource, so that a physical resource with a larger remaining capacity proportion can preferentially provision the virtual resource of the first resource type, and a requirement of a large quantity of resources can be more easily satisfied.

In a possible implementation, the provisioning benefit of the any physical resource includes a difference between a first reward resource from provisioning the virtual resource of the first resource type by the any physical resource and a cost loss, and the remaining capacity of the any physical resource equals a difference between the total capacity used by the any physical resource to provision the virtual resource of the first resource type and a capacity already used. Based on the difference between the first reward resource from provisioning the virtual resource of the first resource type by the any physical resource and the cost loss, the provisioning benefit of provisioning the virtual resource of the first resource type by the any physical resource can be accurately determined; and based on the total capacity used by the any physical resource to provision the virtual resource of the first resource type and the capacity already used, the remaining capacity of the any physical resource used for provisioning the virtual resource of the first resource type can be accurately determined.

In a possible implementation, when a virtual resource of a second resource type is further deployed on the any physical resource, the cost loss of provisioning the virtual resource of the first resource type by the any physical resource is determined based on at least one of a first cost of provisioning the virtual resource of the first resource type by the any physical resource, a second cost of provisioning the virtual resource of the second resource type by the any physical resource, or a second reward resource from provisioning the virtual resource of the second resource type by the any physical resource, where the second resource type is different from the first resource type.

Based on at least one of the second cost of provisioning the virtual resource of the second resource type by the any physical resource, the second reward resource, or the first cost of provisioning the virtual resource of the first resource type by the any physical resource, a cost loss of provisioning the virtual resource of the first resource type can be determined more accurately in a comprehensive manner, and further, the provisioning benefit of provisioning the virtual resource of the first resource type by the any physical resource can be more accurately determined based on the determined cost loss.

In a possible implementation, before the determining, from the plurality of physical resources, the at least one physical resource on which the virtual resource of the first resource type is deployed, the method further includes: determining a mapping relationship between the plurality of physical resources and a resource type of a virtual resource deployed on the plurality of physical resources; and the determining, from the plurality of physical resources, the at least one physical resource on which the virtual resource of the first resource type is deployed includes: determining the at least one physical resource from the plurality of physical resources based on the mapping relationship and the first resource type. Based on the first resource type and the mapping relationship between the plurality of physical resources and the resource type of the virtual resource deployed on the plurality of physical resources, the at least one physical resource that can be used for provisioning the virtual resource of the first resource type can be efficiently and accurately determined.

In a possible implementation, the first resource request further includes a required resource amount of the first virtual resource, and controlling, based on the provisioning priority, the at least one physical resource to provision the first virtual resource includes: determining, based on the provisioning priority, the required resource amount of the first virtual resource, and the remaining capacity of the at least one physical resource used for provisioning the virtual resource of the first resource type, a first physical resource used for provisioning the first virtual resource and a resource provisioning amount of the first physical resource, where there is at least one first physical resource, and an accumulated amount of the resource provisioning amount of the at least one first physical resource equals the required resource amount. Based on the resource provisioning sequence indicated by the provisioning priority of the at least one physical resource, the required resource amount, and a remaining capacity that is of each physical resource in the at least one physical resource and that can be used for provisioning the first virtual resource, the first physical resource that needs to provision the first virtual resource and a resource provisioning amount of each first physical resource are determined more accurately.

According to a second aspect, a resource provisioning apparatus is provided, where the apparatus is used in a cloud management platform, and the cloud management platform is configured to manage a plurality of physical resources. The apparatus includes: an obtaining module, configured to obtain a first resource request, where the first resource request includes a first resource type of a first virtual resource that is requested to be provisioned; a determining module, configured to determine, from the plurality of physical resources, at least one physical resource on which a virtual resource of the first resource type is deployed, where the obtaining module is further configured to obtain a provisioning priority of the at least one physical resource for the virtual resource of the first resource type, where the provisioning priority indicates a provisioning sequence of the at least one physical resource for the virtual resource of the first resource type; and a control module, configured to control, based on the provisioning priority, the at least one physical resource to provision the first virtual resource.

In a possible implementation, a provisioning priority of any physical resource in the at least one physical resource for the virtual resource of the first resource type is determined based on at least one of a provisioning benefit or a remaining capacity of the any physical resource, the provisioning benefit of the any physical resource is a benefit of provisioning the virtual resource of the first resource type by the any physical resource, and the remaining capacity of the any physical resource is an amount of the any physical resource still available for provisioning the virtual resource of the first resource type.

In a possible implementation, the provisioning priority of the any physical resource for the virtual resource of the first resource type is positively correlated with the provisioning benefit of the any physical resource; and the provisioning priority of the any physical resource for the virtual resource of the first resource type is positively correlated with the amount of the remaining capacity of the any physical resource, or the provisioning priority of the any physical resource for the virtual resource of the first resource type is positively correlated with a remaining capacity proportion of the any physical resource, where the remaining capacity proportion of the any physical resource is a proportion of the remaining capacity of the any physical resource used for provisioning the virtual resource of the first resource type to a total capacity.

In a possible implementation, the provisioning benefit of the any physical resource includes a difference between a first reward resource from provisioning the virtual resource of the first resource type by the any physical resource and a cost loss, and the remaining capacity of the any physical resource equals a difference between the total capacity used by the any physical resource to provision the virtual resource of the first resource type and a capacity already used.

In a possible implementation, when a virtual resource of a second resource type is further deployed on the any physical resource, the cost loss of provisioning the virtual resource of the first resource type by the any physical resource is determined based on at least one of a first cost of provisioning the virtual resource of the first resource type by the any physical resource, a second cost of provisioning the virtual resource of the second resource type by the any physical resource, or a second reward resource from provisioning the virtual resource of the second resource type by the any physical resource, where the second resource type is different from the first resource type.

In a possible implementation, the determining module is further configured to determine a mapping relationship between the plurality of physical resources and a resource type of a virtual resource deployed on the plurality of physical resources; and the determining module is configured to determine the at least one physical resource from the plurality of physical resources based on the mapping relationship and the first resource type.

In a possible implementation, the first resource request further includes a required resource amount of the first virtual resource, and the control module is configured to: determine, based on the provisioning priority, the required resource amount of the first virtual resource, and the remaining capacity of the at least one physical resource used for provisioning the virtual resource of the first resource type, a first physical resource used for provisioning the first virtual resource and a resource provisioning amount of the first physical resource, where there is at least one first physical resource, and an accumulated amount of the resource provisioning amount of the at least one first physical resource equals the required resource amount; and control, based on the resource provisioning amount of the first physical resource, the first physical resource to provision the first virtual resource.

According to a third aspect, a computing device cluster is provided, including at least one computing device. Each computing device includes a processor and a memory. The processor of the at least one computing device is configured to execute instructions stored in the memory of the at least one computing device, to enable the computing device cluster to perform the resource provisioning method according to any one of the first aspect or the possible implementations of the first aspect.

According to a fourth aspect, a computer program or a computer program product including instructions is provided. When the instructions are run by a computing device cluster, the computing device cluster is enabled to perform the resource provisioning method according to any one of the first aspect or the possible implementations of the first aspect. The computer program product may be a software installation package, and the software installation package includes the computer program. When a function of the foregoing computing device cluster needs to be implemented, the computer program product may be downloaded, and the computer program or the computer program product may be executed on the computing device cluster.

According to a fifth aspect, a computer-readable storage medium is provided, including computer program instructions. When the computer program instructions are executed by a computing device cluster, the computing device cluster performs the resource provisioning method according to any one of the first aspect or the possible implementations of the first aspect. The storage medium includes but is not limited to a volatile memory, for example, a random access memory, or a non-volatile memory, for example, a flash memory, a hard disk drive (hard disk drive, HDD), or a solid-state drive (solid-state drive, SSD).

It should be understood that, for beneficial effects achieved by the technical solutions of the second aspect to the fifth aspect and the corresponding possible implementations of the technical solutions of the second aspect to the fifth aspect of this application, refer to the technical effects of the first aspect and the corresponding possible implementations of the first aspect. Details are not described herein again.

### BRIEF DESCRIPTION OF DRAWINGS

FIG. 1 is a diagram of an implementation scenario of resource provisioning according to an embodiment of this application;
FIG. 2 is a flowchart of a resource provisioning method according to an embodiment of this application;
FIG. 3 is a diagram of a user interface for configuring a provisioning rule according to an embodiment of this application;
FIG. 4 is a diagram of a display interface of a resource provisioning solution according to an embodiment of this application;
FIG. 5 is a diagram of effect of resource provisioning according to an embodiment of this application;
FIG. 6 is a diagram of a structure of a resource provisioning apparatus according to an embodiment of this application;
FIG. 7 is a diagram of a hardware structure of a computing device according to an embodiment of this application;
FIG. 8 is a diagram of a structure of a computing device cluster according to an embodiment of this application; and
FIG. 9 is a diagram of a connection mode of a computing device cluster according to an embodiment of this application.

### DESCRIPTION OF EMBODIMENTS

Terms used in implementations of this application are merely used to explain specific embodiments of this application, but are not intended to limit this application.

In the field of cloud computing technologies, a plurality of cloud services may be run and provided based on virtual resources. The virtual resource is a resource obtained through virtualization based on a physical resource. A combination of a plurality of virtual resources may form a virtualized computer system, and the virtualized computer system may be referred to as a virtual machine. The virtual machine may include the plurality of virtual resources. In some cases, the virtual machine may include only one type of virtual resource. In this case, the virtual machine is equivalent to the virtual resource. The virtual resource may be provisioned by the physical resource. A process of provisioning the virtual resource by the physical resource may be referred to as resource provisioning or virtual resource provisioning. One physical resource can provision one or more types of virtual resources, and one type of virtual resource can be provisioned by one or more physical resources.

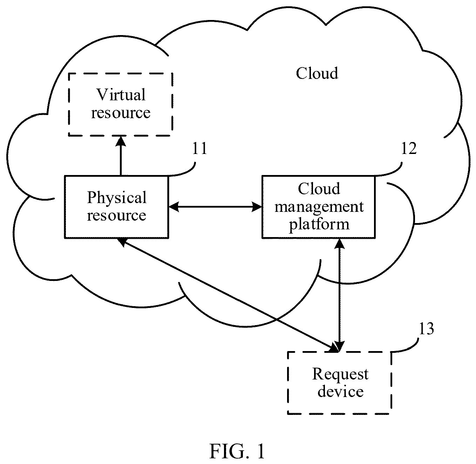

FIG. 1 is a diagram of an implementation scenario of resource provisioning. The implementation scenario includes a physical resource 11 and a cloud management platform 12. The physical resource 11 is deployed on a cloud, and the physical resource 11 may also be referred to as a resource pool or a physical resource pool. The physical resource 11 is a device that can provision a virtual resource (or referred to as a virtual machine), for example, a server obtained by combining hardware configurations such as a physical central processing unit (central processing unit, CPU), a memory, a graphics processing unit (graphics processing unit, GPU), or a storage device. Correspondingly, the virtual resource that can be provisioned by the physical resource 11 may include one resource or a combination of a plurality of resources that is obtained through allocation, division, and virtualization based on hardware configurations such as the physical CPU, the memory, the GPU, or the storage device. There may be one or more physical resources 11, and different physical resources 11 may be of different types. For example, the type of the physical resource 11 may be a physical resource type (resource type, RT) c3_2, RTc3_4, or the like.

The cloud management platform 12 may also be referred to as a management device, a control device, or a virtual resource selling device. The cloud management platform 12 is deployed on the cloud, and is configured to manage and control the one or more physical resources 11 connected to the cloud management platform 12.

Optionally, the implementation scenario may further include a virtual resource request device 13, and the request device 13 is communicatively connected to the cloud management platform 12 and the physical resource 11. The request device 13 is a device having a requirement for the virtual resource, for example, may be a device that can operate based on the virtual resource, such as a terminal used by a user or a non-user equipment. The request device 13 can report the requirement for the virtual resource to the cloud management platform 12, and can further obtain, by accessing the physical resource 11, the virtual resource provisioned by the physical resource 11.

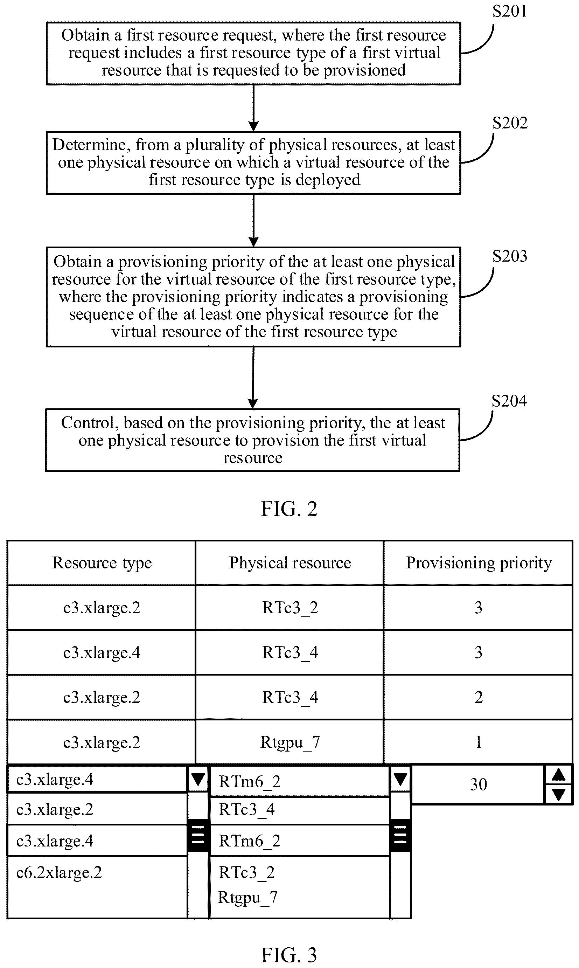

Embodiments of this application provide a resource provisioning method, to implement flexible resource provisioning. The method may be applied to the implementation scenario shown in FIG. 1. For example, the method may be performed by the cloud management platform. For example, the method includes but is not limited to S201 to S204 shown in FIG. 2.

S201: Obtain a first resource request, where the first resource request includes a first resource type of a first virtual resource that is requested to be provisioned.

The first virtual resource may include one or more types of virtual resources. Therefore, the first resource type may also include a resource type of one type of virtual resource or resource types of a plurality of types of virtual resources. A manner of obtaining the first resource request is not limited in this embodiment of this application. For example, a cloud management platform may obtain the first resource request by receiving the first resource request sent by a request device. Alternatively, the cloud management platform may independently generate the first resource request based on the first resource type of the required first virtual resource that is sent by the request device.

S202: Determine, in a plurality of physical resources, at least one physical resource on which a virtual resource of the first resource type is deployed.

If a hardware configuration of any physical resource can satisfy a use requirement for a virtual resource of a specified resource type, it may be considered that the virtual resource of the specified resource type is deployed on the physical resource, and it is further considered that the physical resource can be used for provisioning the virtual resource of the specified resource type. For example, if hardware configurations of a physical resource A can satisfy a use requirement for a virtual resource a (a virtual resource whose resource type is a), it may be considered that the virtual resource a is deployed on the physical resource A, and the physical resource A can be used for provisioning the virtual resource a. Therefore, in this embodiment of this application, the at least one physical resource on which the virtual resource of the first resource type is deployed may be determined, based on the first resource type, in the plurality of physical resources managed by the cloud management platform.

In a possible implementation, before determining the at least one physical resource on which the virtual resource of the first resource type is deployed, the cloud management platform may first determine a mapping relationship between the plurality of physical resources managed by the cloud management platform and a resource type of a virtual resource deployed on the plurality of physical resources, to determine, based on the mapping relationship and the first resource type, the at least one physical resource corresponding to the first resource type. The mapping relationship may also be referred to as a provisioning relationship, and indicates a specific resource type of a virtual resource that can be provisioned by the physical resource. For example, the physical resource A may be used for provisioning virtual resources of two resource types: the resource type a and a resource type b. In this case, there is a mapping relationship between the physical resource A and both the resource type a and the resource type b, and the mapping relationship may be denoted as "a, b→A" or "A→a, b".

A method for determining the mapping relationship between the plurality of physical resources and the resource type of the virtual resource deployed on the plurality of physical resources is not limited in this embodiment of this application. For example, a hardware configuration of each of the plurality of physical resources may be determined by detecting the plurality of physical resources, to determine that the hardware configuration of each physical resource can satisfy a use requirement of a specific resource type of a virtual resource, so as to determine the resource type of the virtual resource that can be provisioned by each physical resource. In this way, a mapping relationship between each physical resource and the resource type of the virtual resource deployed on each physical resource is determined.

Optionally, the mapping relationship may be determined after the cloud management platform and the plurality of physical resources are initialized. After determining the mapping relationship, the cloud management platform may store the mapping relationship, and modify the mapping relationship based on a change status of each physical resource managed by the cloud management platform.

In some cases, a process of determining the at least one physical resource based on the mapping relationship and the first resource type may include: determining, from the mapping relationship, a mapping relationship including the first resource type, and then determining, based on the mapping relationship including the first resource type, the at least one physical resource that can provision the virtual resource of the first resource type.

S203: Obtain a provisioning priority of the at least one physical resource for the virtual resource of the first resource type, where the provisioning priority indicates a provisioning sequence of the at least one physical resource for the virtual resource of the first resource type.

After the at least one physical resource that can be used for provisioning the virtual resource of the first resource type is determined, the provisioning priority of the at least one physical resource for the virtual resource of the first resource type may be obtained, to implement flexible provisioning of the virtual resource based on the provisioning priority of the at least one physical resource for the virtual resource of the first resource type. For example, a process of obtaining the provisioning priority of the at least one physical resource for the virtual resource of the first resource type may include: determining the provisioning priority of the at least one physical resource for the virtual resource of the first resource type based on a resource provisioning status of the at least one physical resource.

In a possible implementation, the resource provisioning status of the at least one physical resource may include at least one of a provisioning benefit or a remaining capacity of the at least one physical resource. In this implementation, a provisioning priority of any physical resource in the at least one physical resource for the virtual resource of the first resource type may be determined based on at least one of a provisioning benefit or a remaining capacity of the any physical resource.

The provisioning benefit of the any physical resource is a benefit of provisioning the virtual resource of the first resource type by the any physical resource. For example, the provisioning benefit of the any physical resource includes a difference between a first reward resource from provisioning the virtual resource of the first resource type by the any physical resource and a cost loss. The first reward resource from provisioning the virtual resource of the first resource type by the any physical resource may be revenue (for example, rental revenue) from provisioning the virtual resource of the first resource type by the any physical resource.

Optionally, the provisioning priority of the any physical resource for the virtual resource of the first resource type is positively correlated with the provisioning benefit of the any physical resource. A larger provisioning benefit of the any physical resource for the virtual resource of the first resource type indicates a larger benefit that can be obtained by provisioning the virtual resource of the first resource type by the physical resource. Therefore, the provisioning priority of the any physical resource for the virtual resource of the first resource type is positively correlated with the provisioning benefit of the any physical resource, so that a physical resource with a larger benefit can preferentially provision the virtual resource of the first resource type, and more benefits can be obtained.

In a possible implementation, a virtual resource of a second resource type different from the first resource type is further deployed on the any physical resource. Because a capacity used by each physical resource to provision a virtual resource is limited, for a physical resource on which a plurality of types of virtual resources are deployed, provisioning the virtual resource of the first resource type by using a partial capacity causes the partial capacity to be unavailable for provisioning a virtual resource of another resource type. Therefore, in this implementation, the cost loss of provisioning the virtual resource of the first resource type by the any physical resource may be determined based on at least one of a first cost of provisioning the virtual resource of the first resource type by the any physical resource, a second cost of provisioning the virtual resource of the second resource type by the any physical resource, or a second reward resource from provisioning the virtual resource of the second resource type by the any physical resource.

For example, in the physical resources managed by the cloud management platform, there are three types of physical resources that can provision the virtual resource a: the physical resource A, a physical resource B, and a physical resource C. Hardware configurations of the physical resource A include a J-type CPU and a K-type GPU, hardware configurations of the physical resource B include a J-type CPU and a P-type object storage service (object storage service, OBS) storage, and a hardware configuration of the physical resource C includes a J-type CPU. If the virtual resource a requested by a user needs to be provisioned by using the hardware configuration J-type CPU of the physical resource, in terms of hardware performance, the physical resource A, the physical resource B, and the physical resource C may all be used for provisioning the virtual resource a.

In addition, the physical resource A can further provision, by using the hardware configuration K-type GPU, a virtual resource whose resource type is b (referred to as a virtual resource b for short). That is, a virtual resource of the second resource type deployed on the physical resource A is the virtual resource b. The physical resource B can further provision, by using the hardware configuration P-type OBS storage, a virtual resource whose resource type is c (referred to as a virtual resource c for short). That is, a virtual resource of the second resource type deployed on the physical resource B is the virtual resource c.

It can be learned that provisioning the virtual resource a by the physical resource A causes losing capacity for provisioning the virtual resource b by using the K-type GPU. Therefore, a cost loss of provisioning the virtual resource a by the physical resource A is positively correlated with a second cost of provisioning the virtual resource b and a second reward resource. Provisioning the virtual resource a by the physical resource B causes losing capacity for provisioning the virtual resource c by using the P-type OBS storage. Therefore, a cost loss of provisioning the virtual resource a by the physical resource B is positively correlated with a second cost of provisioning the virtual resource c and a second reward resource. If the physical resource C is used for provisioning the virtual resource a, hardware is completely matched. That is, a cost loss of provisioning the virtual resource a is related only to a first cost of the virtual resource a.

Because the provisioning benefit of the physical resource for the virtual resource of the first resource type is the difference between the first reward resource and the cost loss, when the first reward resource remains unchanged, a larger cost loss of provisioning the virtual resource of the first resource type by the physical resource indicates a smaller provisioning benefit of the physical resource, and a lower provisioning priority of provisioning the virtual resource of the first resource type by the physical resource.

In addition, the cost loss of provisioning the virtual resource of the first resource type by the any physical resource is positively correlated with the first cost of provisioning the virtual resource of the first resource type by the any physical resource, the second cost of provisioning the virtual resource of the second resource type by the any physical resource, and the second reward resource from provisioning the virtual resource of the second resource type by the any physical resource. Therefore, when a second cost and a second reward resource from provisioning a virtual resource of the second resource type by the physical resource C are zero, and the second cost and the second reward resource from provisioning the virtual resource b of the second resource type by the physical resource A are respectively higher than the second cost and the second reward resource from provisioning the virtual resource c of the second resource type by the physical resource B, it may be determined that, for the virtual resource a, a provisioning priority of the physical resource C is the highest, a provisioning priority of the physical resource B is the second highest, and a provisioning priority of the physical resource A is the lowest. The provisioning priorities and mapping relationships of the three physical resources may be represented as follows:
The provisioning priority of provisioning the virtual resource a by the physical resource C is the highest: C→a: 3.
The provisioning priority of provisioning the virtual resource a by the physical resource B is the second highest: B→a: 2.
The provisioning priority of provisioning the virtual resource a by the physical resource A is the lowest: A→a: 1.

To be specific, when a requested virtual resource is the virtual resource a, if the physical resource C can provision abundant virtual resources a, the virtual resource a is first provisioned by the physical resource C; after the physical resource C is exhausted, the virtual resource a is provisioned by the physical resource B; and after the physical resource B is also exhausted, the virtual resource a is provisioned by the physical resource A.

In this embodiment of this application, the remaining capacity of the any physical resource is an amount of the any physical resource still available for provisioning the virtual resource of the first resource type. For example, the remaining capacity of the any physical resource includes a difference between a total capacity used by the any physical resource to provision the virtual resource of the first resource type and a capacity already used.

Optionally, the provisioning priority of the any physical resource for the virtual resource of the first resource type is positively correlated with the amount of the remaining capacity of the any physical resource. A larger remaining capacity of the any physical resource for the virtual resource of the first resource type indicates a larger quantity of virtual resources that are of the first resource type and that can be provisioned by the physical resource. Therefore, the provisioning priority of the any physical resource for the virtual resource of the first resource type is positively correlated with the remaining capacity of the any physical resource, so that a physical resource with a larger remaining capacity can preferentially provision the virtual resource of the first resource type, and a requirement of a large quantity of resources can be more easily satisfied.

In a possible implementation, the provisioning priority of the any physical resource for the virtual resource of the first resource type may be further positively correlated with a remaining capacity proportion of the any physical resource. The remaining capacity proportion of the any physical resource is a proportion of the remaining capacity of the any physical resource used for provisioning the virtual resource of the first resource type to the total capacity. A larger remaining capacity proportion of the any physical resource for the virtual resource of the first resource type indicates a larger quantity of virtual resources that are of the first resource type and that can be provisioned by the physical resource. Therefore, the provisioning priority of the any physical resource for the virtual resource of the first resource type is positively correlated with the remaining capacity proportion of the any physical resource, so that a physical resource with a larger remaining capacity proportion can preferentially provision the virtual resource of the first resource type, and a requirement of a large quantity of resources can be more easily satisfied.

For example, the hardware configurations of the physical resource A, the physical resource B, and the physical resource C all include the J-type CPU, and remaining capacity proportions of the J-type CPUs in the three types of physical resources are respectively P(A), P(B) and P(C), where P(A) >P(B) >P(C). In this case, when the physical resource A, the physical resource B, and the physical resource C all can be used for provisioning the virtual resource a that requires the J-type CPU in terms of hardware performance, it may be determined, based on the remaining capacity proportions of the J-type CPUs in the physical resources, that for the virtual resource a, the provisioning priority of the physical resource C is the highest, the provisioning priority of the physical resource B is the second highest, and the provisioning priority of the physical resource A is the lowest. The provisioning priorities and mapping relationships of the three physical resources may be represented as follows:
The provisioning priority of provisioning the virtual resource a by the physical resource C is the highest: C→a: P(C).
The provisioning priority of provisioning the virtual resource a by the physical resource B is the second highest: B→a: P(B).
The provisioning priority of provisioning the virtual resource a by the physical resource A is the lowest: A→a: P(A).

In addition, the remaining capacity proportion of the any physical resource used for provisioning the virtual resource of the first resource type can further reflect a selling status of the any physical resource for the virtual resource of the first resource type. A larger remaining capacity proportion of the any physical resource indicates a smaller quantity of virtual resources that are of the first resource type and that are provisioned by the any physical resource, and a worse selling status of the any physical resource for the virtual resource of the first resource type. However, a smaller remaining capacity proportion of the any physical resource indicates that a larger quantity of virtual resources that are of the first resource type and that are provisioned by the any physical resource, and a better selling status of the any physical resource for the virtual resource of the first resource type.

In some cases, in this embodiment of this application, the provisioning priority may alternatively be determined by comprehensively considering the provisioning benefit and the remaining capacity of the at least one physical resource. For example, different weights may be assigned to the provisioning benefit and the remaining capacity, and the provisioning priority of the at least one physical resource is determined through weighted calculation. Correspondingly, in this embodiment of this application, the provisioning priority may alternatively be determined by comprehensively considering the provisioning benefit and the remaining capacity proportion of the at least one physical resource. For example, different weights may alternatively be assigned to the provisioning benefit and the remaining capacity proportion, and the provisioning priority of the at least one physical resource is determined through weighted calculation.

In a possible implementation, a process of obtaining, by the cloud management platform, the provisioning priority of the at least one physical resource for the virtual resource of the first resource type may further include: obtaining at least one provisioning rule corresponding to the at least one physical resource, where a provisioning rule corresponding to the any physical resource includes the provisioning priority of the any physical resource for the virtual resource of the first resource type; and obtaining the provisioning priority of the at least one physical resource from the at least one provisioning rule.

In this implementation, the provisioning priority of the at least one physical resource is determined before the cloud management platform obtains the provisioning priority of the at least one physical resource based on the first resource request, and the provisioning priority may be configured after the provisioning priority of the at least one physical resource is determined. For example, the at least one provisioning rule corresponding to the at least one physical resource may be generated based on the provisioning priority of the at least one physical resource for the virtual resource of the first resource type, to configure the provisioning priority of the at least one physical resource.

In a possible implementation, the provisioning rule may be configured by using a provisioning label that carries a provisioning priority. For example, the physical resource A, the physical resource B, and the physical resource C may all be used for provisioning the virtual resource a, and the provisioning priorities of provisioning the virtual resource a by the physical resource A, the physical resource B, and the physical resource C are in ascending order. In this case, three levels of provisioning labels may be configured for the virtual resource a: LABEL (LABEL)-a.1, LABEL-a.2 and LABEL-a.3, or Label type (Type) #1, Label Type #2, and Label Type #3, where numbers 1, 2, and 3 in the labels respectively represent a low provisioning priority, a medium provisioning priority, and a high provisioning priority. Correspondingly, the physical resource A has the label LABEL-a.1 or Label Type #1, the physical resource B has the label LABEL-a.2 or Label Type #2, and the physical resource C has the label LABEL-a.3 or Label Type #3.

Optionally, the at least one provisioning rule may further include a mapping relationship between the at least one physical resource and a resource type of a virtual resource deployed on the at least one physical resource. When the at least one provisioning rule includes the mapping relationship between the at least one physical resource and the resource type of the virtual resource deployed on the at least one physical resource, a form of the provisioning rule may be: "A physical resource X may be used for provisioning a virtual resource x (mapping relationship), and a provisioning priority is i". The provisioning rule may be represented as X~x: i. The provisioning priority i may be a natural number, indicating that when a plurality of types of physical resources can be used for provisioning the virtual resource x, a provisioning priority of provisioning the virtual resource x by the physical resource X is i, where a larger value of i indicates a higher provisioning priority. In addition, for the provisioning priority i, in addition to the natural number, a sequence of English letters or a Roman numeral may be used for representing a rank of the provisioning priority.

For example, for an example scenario in which the CPU of the physical resource A and the CPU the physical resource B have same target performance, but the physical resource B can additionally provide a graphics card or a large memory, the following provisioning rule may be configured in this embodiment of this application: "The physical resource A may be used for provisioning the virtual resource a, and the provisioning priority is 3; and the physical resource B may be used for provisioning the virtual resource a, and the provisioning priority is 2". Because the hardware configuration of the physical resource B is better, and the cost loss of provisioning the virtual resource a by the physical resource B is higher, a lower provisioning priority may be configured for a provisioning relationship between the physical resource B and the virtual resource a.

For another example, a physical resource RTc3_2 is most suitable for provisioning a virtual resource of a resource type c3.xlarge (xlarge).2. When a mapping relationship c3.xlarge.2→RTc3_2 is configured, a label "Label Type #1" needs to be configured for the virtual resource whose resource type is c3.xlarge.2, and then the same label "Label Type #1" needs to be configured for the physical resource RTc3_2. In this way, the mapping relationship c3.xlarge.2→RTc3_2 is configured.

In another possible embodiment, a form of the provisioning rule may alternatively be: "A physical resource X may be used for provisioning a virtual resource x, and a provisioning relationship score is 90 points". In this provisioning rule, the provisioning relationship score is used for representing rank of the provisioning priority, and a higher score indicates a higher provisioning priority.

A manner of representing the provisioning priority is not limited in this embodiment of this application. When a plurality of types of physical resources can be used for provisioning a target virtual resource of a same resource type, information that can be used for determining a specific type of physical resource that is preferentially used for provisioning the target virtual resource may be used as a manner of representing the provisioning priority in this embodiment of this application.

For example, FIG. 3 is a diagram of a user interface (user interface, UI) for configuring a provisioning rule. The interface may be a management configuration interface that is on a cloud management platform and that is oriented to a dedicated resource pool administrator or a private cloud administrator. The provisioning rule may be manually configured or modified on the interface.

The interface includes three columns: resource type of a virtual resource, physical resource, and provisioning priority. The resource type includes resource types of all virtual resources that can be provisioned by all physical resources managed by the cloud management platform. For example, the resource types may include c3.xlarge.2, c3.xlarge.4, and c6.2xlarge.2 shown in FIG. 3. The physical resource includes all physical resources managed by the cloud management platform. For example, the physical resources include RTc3_2, RTc3_4, RTm6_2, and Rtgpu_7 shown in FIG. 3. The provisioning priority can be any natural number.

As shown in FIG. 3, below the column of the resource type of the virtual resource (a selection box represented by a bold rectangle), a configuration of a provisioning rule for a virtual resource of a resource type may be determined by selecting different resource types of virtual resources. After the resource type of the virtual resource is selected, a physical resource that can provision the virtual resource of the resource type can be selected in the column of the physical resource, and a provisioning priority corresponding to a mapping relationship between the physical resource and the virtual resource type can be configured in the column of the provisioning priority, so that the configuration of the provisioning rule is completed. The configured provisioning rule can further be modified on the interface. For example, if remaining capacities of a plurality of physical resources used for provisioning virtual resources of a same resource type change, causing a change in provisioning priorities of the plurality of physical resources, provisioning rules may be changed based on changed provisioning priorities, so that changed provisioning rules match the changed provisioning priorities.

After a configuration of each provisioning rule is completed, the provisioning priority may be efficiently obtained based on the provisioning rule when the provisioning priority is obtained. For example, obtaining the provisioning priority of the at least one physical resource for the virtual resource of the first resource type may include: determining at least one provisioning rule corresponding to the first resource type; and obtaining the provisioning priority of the at least one physical resource for the virtual resource of the first resource type from the at least one provisioning rule. In addition, because the provisioning rule may further include the mapping relationship between the physical resource and the resource type of the virtual resource, the at least one physical resource may be further determined in the plurality of physical resources based on the mapping relationship and the first resource type.

For example, refer to FIG. 3. If the first resource type is c3.xlarge.4, it may be determined, in the provisioning rules, that a provisioning rule corresponding to c3.xlarge.4 includes: RTc3_4, and a provisioning priority of the physical resource RTc3_4 for a virtual resource whose resource type is c3.xlarge.4 is 3.

S204: Control, based on the provisioning priority, the at least one physical resource to provision the first virtual resource.

After obtaining the provisioning priority of the at least one physical resource, the cloud management platform may control all physical resources in the at least one physical resource to jointly provision the first virtual resource, or may control some physical resources in the at least one physical resource to provision the first virtual resource. In a possible implementation, the first resource request further includes a required resource amount of the first virtual resource. In this implementation, a first physical resource used for provisioning the first virtual resource and a resource provisioning amount of the first physical resource may be determined based on the provisioning priority, the required resource amount of the first virtual resource, and the remaining capacity of the at least one physical resource used for provisioning the virtual resource of the first resource type, to control the first physical resource that is in the at least one physical resource and that needs to provision the first virtual resource to provision the first virtual resource.

The required resource amount may be a quantity of required virtual resources or a quantity of cores. If the first virtual resource includes one type of virtual resource, the required resource amount of the first virtual resource is an amount required for one type of virtual resource. For example, the first resource type is a1, and the required resource amount is s1. This indicates that the first resource request is used for requesting a virtual resource whose resource type is a1, and an amount required for the virtual resource whose resource type is a1 is s1.

If the first virtual resource includes a plurality of types of virtual resources, the required resource amount of the first virtual resource may be an amount required for all types of virtual resources in the plurality of types of virtual resources, or the required resource amount of the first virtual resource may be a total amount required for the plurality of types of virtual resources. For example, first resource types include a2 and a3, and required resource amounts are s2 and s3 respectively. This indicates that the first resource request is used for requesting virtual resources whose resource types are a2 and a3 respectively, an amount required for the virtual resource whose resource type is a2 is s2, and an amount required for the virtual resource whose resource type is a3 is s3. For another example, first resource types include a4 and a5, and the required resource amount is s4. This indicates that the first resource request is used for requesting at least one of a virtual resource whose resource type is a4 or a virtual resource whose resource type is a5, and a total amount required for the virtual resource is s4.

In this embodiment of this application, for different physical resources that can provision a virtual resource of a same resource type, if a provisioning priority of the physical resource for the virtual resource of the resource type is higher, a rank of provisioning the virtual resource of the same resource type by the physical resource is higher. That is, provisioning priorities of the physical resources can indicate a resource provisioning sequence of the physical resources.

Therefore, in some cases, provisioning priorities of all physical resources for the virtual resource of the first resource type may be sorted in descending order or ascending order, and a sequence of all the physical resources after the sorting is a resource provisioning sequence of all the physical resources. For example, the provisioning priorities of all the physical resources for the virtual resource of the first resource type are sorted in descending order. At least one physical resource that can be used for provisioning a virtual resource of a first resource type a includes a physical resource A, a physical resource B, and a physical resource C. For the virtual resource of the first resource type a, a provisioning priority of the physical resource A is 3, a provisioning priority of the physical resource B is 2, and a provisioning priority of the physical resource C is 1. The provisioning priorities of all physical resources for the virtual resource of the first resource type a are sorted in descending order, so that an obtained sequence is: physical resource A-physical resource B-physical resource C. In this case, a resource provisioning sequence of all the physical resources is also: physical resource A (1^{st})-physical resource B (2^{nd})-physical resource C (3^{rd}).

After a resource provisioning sequence of the at least one physical resource is determined, a resource provisioning amount of the at least one physical resource may be sequentially determined based on the remaining capacity of the at least one physical resource, the required resource amount of the first virtual resource, and the resource provisioning sequence of the at least one physical resource.

In a possible implementation, when the resource provisioning amount of the at least one physical resource is determined, a resource provisioning amount of each physical resource may be sequentially determined based on a remaining capacity of each physical resource, until an accumulated amount of all resource provisioning amounts equals the required resource amount of the first virtual resource. The accumulated amount refers to a sum of all the resource provisioning amounts.

For example, if the first resource type included in the first resource request is c3.xlarge.2 or arm.xlarge.4, the required resource amount is M cores (or referred to as M-core). Configured provisioning rules are as follows: A virtual resource whose resource type is c3.xlarge.2 has provisioning labels "label CPU x86 gen3" and "label CPU x86 gen2", and provisioning priorities corresponding to the two provisioning labels are 3 and 2 respectively; and a virtual resource whose resource type is arm.xlarge.4 has provisioning labels "label CPU arm gen2" and "label CPU arm gen1", and provisioning priorities corresponding to the two provisioning labels are 2 and 1 respectively. The at least one physical resource is a physical resource RTc3_2, a physical resource RTc3_4, a physical resource RTarm2, and a physical resource RTarm1. The physical resource RTc3_2, the physical resource RTc3_4, the physical resource RTarm2, and the physical resource RTarm1 respectively correspond to the provisioning labels "label CPU x86 gen3", "label CPU x86 gen2", "label CPU arm gen2", and "label CPU arm gen1".

It can be learned from the provisioning priority of the at least one physical resource that the resource provisioning sequence of the at least one physical resource is: physical resource RTc3_2-physical resource RTc3_4/physical resource RTarm2-physical resource RTarm1. In this case, it may be first determined, based on a provisioning relationship "c3.xlarge.2→RTc3_2: 3" with the highest provisioning priority in the provisioning rule and a remaining capacity of the physical resource RTc3_2, that a total amount of virtual resources whose resource type is c3.xlarge.2 and that can be provisioned by the physical resource RTc3_2 based on the remaining capacity is x1 cores. If x1 is greater than or equal to M, it may be determined that the first physical resource is the physical resource RTc3_2, a resource provisioning amount of the physical resource RTc3_2 is M cores, and a resource type of a virtual resource that needs to be provisioned is c3.xlarge.2.

If x1 is less than M, it indicates that the first resource request cannot be satisfied even if the remaining capacity of the physical resource RTc3_2 is all used for provisioning the virtual resource whose resource type is c3.xlarge.2. In this case, it may be determined, based on a provisioning relationship "c3.xlarge.2→RTc3_4:2" with the second highest provisioning priority in the provisioning rule and a remaining capacity of the physical resource RTc3_4, that a total amount of virtual resources whose resource type is c3.xlarge.2 and that can be provisioned by the physical resource RTc3_4 based on the remaining capacity is x2 cores. If x1+x2 is greater than or equal to M, it may be determined that the first physical resource is the physical resource RTc3_2 and the physical resource RTc3_4, the resource provisioning amount of the physical resource RTc3_2 is x1 cores, the resource provisioning amount of the physical resource RTc3_4 is M-x1 cores, and resource types of virtual resources that need to be provisioned by the physical resource RTc3_2 and the physical resource RTc3_4 are both c3.xlarge.2.

Alternatively, because a provisioning priority of a provisioning relationship "arm.xlarge.4→RTarm2:2" with the second highest provisioning priority in the provisioning rule is the same as that of the provisioning relationship "c3.xlarge.2→RTc3_4:2", when x1 is less than M, it may be further determined, based on the provisioning relationship "arm.xlarge.4→RTarm2:2" and a remaining capacity of the physical resource RTarm2, that a total amount of virtual resources whose resource type is arm.xlarge.4 and that can be provisioned by the physical resource RTarm2 based on the remaining capacity is x3 cores. If x1+x3 is greater than or equal to M, it may be determined that the first physical resource is the physical resource RTc3_2 and the physical resource RTarm2, the resource provisioning amount of the physical resource RTc3_2 is x1 cores, a resource provisioning amount of the physical resource RTarm2 is M-x1 cores, a resource type of a virtual resource that needs to be provisioned by the physical resource RTc3_2 is c3.xlarge.2, and a resource type of a virtual resource that needs to be provisioned by the physical resource RTarm2 is arm.xlarge.4.

Alternatively, if x1+x2 is less than M, and x1+x2+x3 is greater than or equal to M, it may be determined that the first physical resource is the physical resource RTc3_2 and the physical resource RTc3_4, the resource provisioning amount of the physical resource RTc3_2 for the virtual resource whose resource type is c3.xlarge.2 is x1 cores, the resource provisioning amount of the physical resource RTc3_4 for the virtual resource whose resource type is c3.xlarge.2 is x2 cores, and the resource provisioning amount of the physical resource RTarm2 for the virtual resource whose resource type is arm.xlarge.4 is M-x1-x2 cores.

Alternatively, if x1+x3 is less than M, and x1+x2+x3 is greater than or equal to M, it may be determined that the first physical resource is the physical resource RTc3_2 and the physical resource RTarm2, the resource provisioning amount of the physical resource RTc3_2 for the virtual resource whose resource type is c3.xlarge.2 is x1 cores, the resource provisioning amount of the physical resource RTarm2 for the virtual resource whose resource type is arm.xlarge.4 is x3 cores, and the resource provisioning amount of the physical resource RTc3_4 for the virtual resource whose resource type is c3.xlarge.2 is M-x1-x3 cores.

If x1+x2+x3 is less than M, it may be determined, based on a provisioning relationship "arm.xlarge.4→RTarm1:1" with a lower provisioning priority and a remaining capacity of the physical resource RTarm1, that a total amount of virtual resources whose resource type is arm.xlarge.4 and that can be provisioned by the physical resource RTarm1 based on the remaining capacity is x4 cores. If x1+x2+x3+x4 is greater than M, it may be determined that the first physical resource is the physical resource RTc3_2, the physical resource RTc3_4, the physical resource RTarm2, and the physical resource RTarm1, the resource provisioning amount of the physical resource RTc3_2 for the virtual resource whose resource type is c3.xlarge.2 is x1 cores, the resource provisioning amount of the physical resource RTc3_4 for the virtual resource whose resource type is c3.xlarge.2 is x2 cores, the resource provisioning amount of the physical resource RTarm2 for the virtual resource whose resource type is arm.xlarge.4 is x3 cores, and the resource provisioning amount of the physical resource RTarm1 for the virtual resource whose resource type is arm.xlarge.4 is M-x1-x2-x3 cores.

If x1+x2+x3+x4 is less than M, it may be considered that a first resource requirement cannot be satisfied even if the physical resource RTc3_2, the physical resource RTc3_4, the physical resource RTarm2, and the physical resource RTarm1 provision the virtual resource of the first resource type based on all remaining capacities. In this way, the request device may be notified of a provisioning failure.

In conclusion, in this embodiment of this application, a resource provisioning solution that can satisfy the first resource request can be dynamically calculated based on the provisioning priority and the required resource amount. The resource provisioning solution may also be referred to as a requirement matching supply solution, and includes specific physical resources are respectively used for provisioning virtual resources of specific resource types and a quantity of cores in total. Optionally, the resource provisioning solution may further include a solution score. A higher solution score indicates higher feasibility of the resource provisioning solution. The solution score may be an average value of scores of provisioning priorities of physical resources for virtual resources in the resource provisioning solution, and the scores of the provisioning priorities of each physical resource for all types of virtual resources may be determined based on experience or a user requirement. For example, the resource provisioning solution includes provisioning of a virtual resource a by a physical resource A and provisioning of the virtual resource a by a physical resource B, a score of a provisioning priority of the physical resource A for the virtual resource a is 90, and a score of a provisioning priority of the physical resource B for the virtual resource a is 80. In this case, the solution score of the resource provisioning solution may be an average value of 90 and 80, that is, 85.

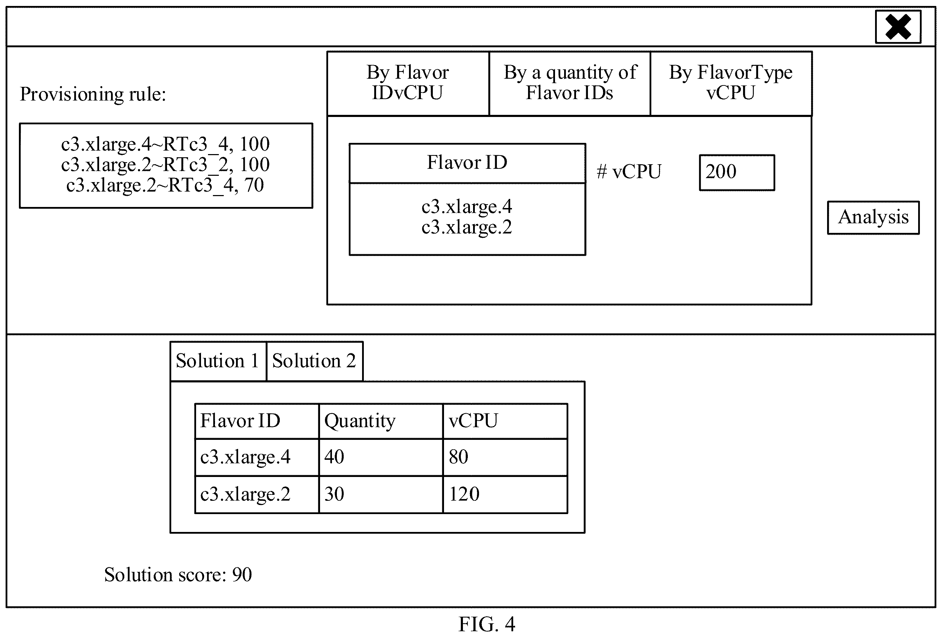

For example, FIG. 4 is a diagram of a display interface of a resource provisioning solution. The display interface may be a resource management interface viewed by a dedicated physical resource administrator or a private cloud administrator on a cloud management platform. The display interface includes provisioning rules corresponding to virtual resources whose resource types are c3.xlarge.4 and c3.xlarge.2. The virtual resource whose resource type is c3.xlarge.4 may be provisioned by a physical resource RTc3_4, the virtual resource whose resource type is c3.xlarge.2 may be provisioned by a physical resource RTc3_2, and the virtual resource whose resource type is c3.xlarge.2 may also be provisioned by the physical resource RTc3_4. A score of a provisioning priority corresponding to a provisioning relationship c3.xlarge.4~RTC3_4 is 100, a score of a provisioning priority corresponding to a provisioning relationship c3.xlarge.2~RTC3_2 is 100, and a score of a provisioning priority corresponding to a provisioning relationship c3.xlarge.2~RTC3_4 is 70.

Still refer to FIG. 4. The display interface further includes a part for displaying a first resource request, including but not limited to flavor identifier (or referred to as a specification instance) virtual central processing unit (flavor identifier virtual central processing unit, Flavor ID vCPU) information or flavor type (or referred to as a specification type) virtual central processing unit (flavor type virtual central processing unit, Flavor Type vCPU) information and a quantity of flavor identifiers (flavor identifiers, Flavor IDs). The virtual central processing unit is a processor that supports running of a virtual machine, and is obtained by dividing a physical processor.

As shown in FIG. 4, By (by) Flavor ID vCPU indicates that a virtual central processing unit that can be indicated by Flavor ID may support running of a first virtual resource. By Flavor ID quantity indicates a quantity of physical resources on which the virtual central processing unit that can be indicated by Flavor ID depends. By Flavor Type vCPU indicates that a virtual central processing unit that can be indicated by Flavor Type may support running of the first virtual resource.

Both Flavor ID and Flavor Type may be used for distinguishing between different virtual central processing units, so that a resource type of a virtual resource whose running can be supported by the virtual central processing unit may be indicated by Flavor ID and Flavor Type. For example, Flavor ID indicates the resource type. The first resource request displayed in the part for displaying the first resource request includes: A first resource type includes c3.xlarge.4 and c3.xlarge.2, and a required resource amount is 200 cores. Based on selection of an analysis control on the display interface, the cloud management platform automatically analyzes and determines information about a first physical resource and a resource provisioning amount of the first physical resource according to the foregoing resource provisioning method. For example, in Solution 1, 80 cores of virtual resources whose resource type is c3.xlarge.4 are provisioned by 40 physical resources, and 120 cores of virtual resources whose resource type is c3.xlarge.2 are provisioned by 30 physical resources. In this case, a score of Solution 1 is 90. In addition, the display interface may further include common resources such as a region (region) to which the virtual resource belongs, an availability zone (availability zone, AZ), and an availability group (availability group, AG).

After the information about the first physical resource and the resource provisioning amount of the first physical resource are determined, a virtual resource in the first physical resource may be provisioned to a user based on the resource provisioning amount of the first physical resource, to implement provisioning of the first virtual resource. A method for provisioning the first virtual resource is not limited in this embodiment of this application. For example, an access link of the first virtual resource in the first physical resource may be generated, and provisioning information including the access link may be sent to a terminal corresponding to the user, so that the user can access the first virtual resource via the access link, to complete provisioning of the first virtual resource.

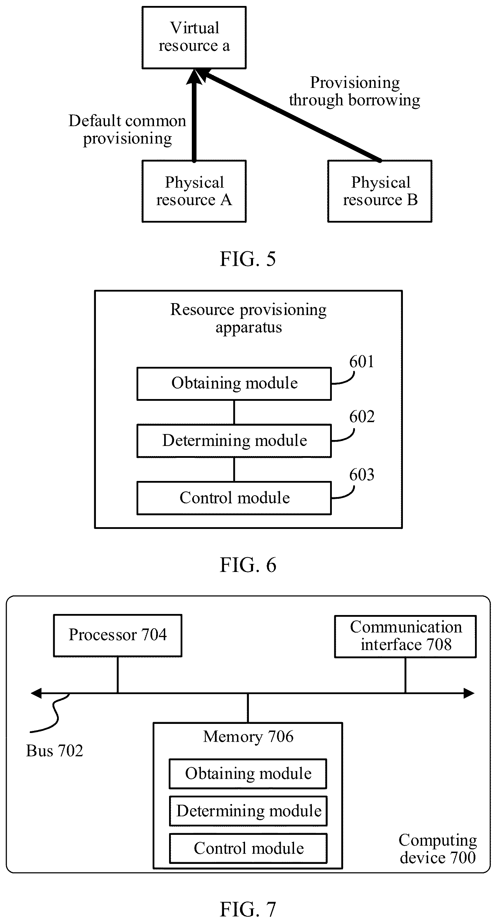

The following describes beneficial effects of the resource provisioning method provided in embodiments of this application by comparing the resource provisioning method provided in embodiments of this application with a related technology. FIG. 5 is a diagram of effect of resource provisioning.

In the related technology, to satisfy resource requirements of different cloud tenants (namely, users), a cloud vendor usually presets a provisioning relationship between a virtual resource and a physical resource, and the provisioning relationship is defined by a provisioning label. A target virtual resource can be provisioned only when the provisioning label matches a physical resource of the target virtual resource. For example, in FIG. 5, a physical resource A and a physical resource B each have hardware configurations: a high-performance CPU and a high-performance graphics card, and are applicable to provisioning of a virtual resource a. In this case, the cloud vendor may set a provisioning label "High Performance (High Performance)" for the physical resource A and the physical resource B, and also set the provisioning label "High Performance" for the virtual resource a. Further, when the user requests the virtual resource a, according to a scheduling algorithm, it is determined, by searching for all physical resources including the label "High Performance", that both the physical resources A and B can be used for provisioning the virtual resource a, and then the virtual resource a is provisioned by the physical resource A or the physical resource B through random arrangement.

However, in consideration of resource costs, in the related technology, when configuring the provisioning relationship, the cloud vendor usually configures a fixed provisioning relationship for a physical resource and a virtual resource that are completely matched or highly matched in terms of hardware and performance, and sets a default common provisioning solution based on the fixed provisioning relationship. For example, the hardware configuration CPU of the physical resource A and the hardware configuration CPU of the physical resource B have same target performance, but the physical resource B can further provide a graphics card or large memory compared with the physical resource A. In this case, for the virtual resource a that requires only the CPU with the target performance, the cloud vendor usually configures a provisioning relationship only for the physical resource A and the virtual resource a. In other words, the default common provisioning solution is as follows: When the user requests the virtual resource a, the virtual resource a is provisioned by the physical resource A, and the physical resource B is not used for provisioning the virtual resource a. Therefore, when the physical resource A is exhausted and the user still has a request for the virtual resource a, the cloud vendor needs to directly perform capacity expansion on the physical resource A to satisfy a peak requirement for the virtual resource a. However, if capacity expansion is performed on the physical resource A, utilization of the physical resource A in a smooth requirement period of the virtual resource a is reduced, and capacity expansion costs of the cloud vendor are increased.

However, in this embodiment of this application, because the hardware configuration of the physical resource B can also satisfy a provisioning requirement of the virtual resource a, provisioning priorities for the virtual resource a may be configured for the physical resource A and the physical resource B. The provisioning priority of the physical resource A is higher than the provisioning priority of the physical resource B, so that when the physical resource A is not exhausted, the virtual resource a is preferentially provisioned by the physical resource A, and when the physical resource A is exhausted but the user still has the request for the virtual resource a, the physical resource B may be controlled to provision the virtual resource a in this embodiment of this application, to satisfy the peak requirement for the virtual resource a and implement provisioning of the virtual resource a through borrowing. In this way, resource provisioning is more flexible, and the capacity expansion costs required for performing capacity expansion on the physical resource A can be reduced.

In this embodiment of this application, the provisioning priority of the at least one physical resource for the virtual resource of the first resource type is obtained, and the at least one physical resource is controlled, based on the provisioning priority, to provision the first virtual resource, so that flexible provisioning of the first virtual resource can be implemented.

The foregoing describes the resource provisioning method provided in embodiments of this application. The following describes, with reference to FIG. 6, a resource provisioning apparatus provided in embodiments of this application as an example. FIG. 6 is a diagram of a structure of the resource provisioning apparatus. The resource provisioning apparatus includes but is not limited to the following modules.

An obtaining module 601 is configured to obtain a first resource request, where the first resource request includes a first resource type of a first virtual resource that is requested to be provisioned. A determining module 602 is configured to determine, in a plurality of physical resources, at least one physical resource on which a virtual resource of the first resource type is deployed. The obtaining module 601 is further configured to obtain a provisioning priority of the at least one physical resource for the virtual resource of the first resource type, where the provisioning priority indicates a provisioning sequence of the at least one physical resource for the virtual resource of the first resource type. A control module 603 is configured to control, based on the provisioning priority, the at least one physical resource to provision the first virtual resource.

In a possible implementation, a provisioning priority of any physical resource in the at least one physical resource for the virtual resource of the first resource type is determined based on at least one of a provisioning benefit or a remaining capacity of the any physical resource, the provisioning benefit of the any physical resource is a benefit of provisioning the virtual resource of the first resource type by the any physical resource, and the remaining capacity of the any physical resource is an amount of the any physical resource still available for provisioning the virtual resource of the first resource type.

In a possible implementation, the provisioning priority of the any physical resource for the virtual resource of the first resource type is positively correlated with the provisioning benefit of the any physical resource; and the provisioning priority of the any physical resource for the virtual resource of the first resource type is positively correlated with the amount of the remaining capacity of the any physical resource, or the provisioning priority of the any physical resource for the virtual resource of the first resource type is positively correlated with a remaining capacity proportion of the any physical resource, where the remaining capacity proportion of the any physical resource is a proportion of the remaining capacity of the any physical resource used for provisioning the virtual resource of the first resource type to a total capacity.

In a possible implementation, the provisioning benefit of the any physical resource includes a difference between a first reward resource from provisioning the virtual resource of the first resource type by the any physical resource and a cost loss, and the remaining capacity of the any physical resource equals a difference between the total capacity used by the any physical resource to provision the virtual resource of the first resource type and a capacity already used.

In a possible implementation, when a virtual resource of a second resource type is further deployed on the any physical resource, the cost loss of provisioning the virtual resource of the first resource type by the any physical resource is determined based on at least one of a first cost of provisioning the virtual resource of the first resource type by the any physical resource, a second cost of provisioning the virtual resource of the second resource type by the any physical resource, or a second reward resource from provisioning the virtual resource of the second resource type by the any physical resource, where the second resource type is different from the first resource type.

In a possible implementation, the determining module 602 is further configured to determine a mapping relationship between the plurality of physical resources and a resource type of a virtual resource deployed on the plurality of physical resources; and the determining module 602 is configured to determine the at least one physical resource from the plurality of physical resources based on the mapping relationship and the first resource type.

In a possible implementation, the first resource request further includes a required resource amount of the first virtual resource, and the control module 603 is configured to: determine, based on the provisioning priority, the required resource amount of the first virtual resource, and the remaining capacity of the at least one physical resource used for provisioning the virtual resource of the first resource type, a first physical resource used for provisioning the first virtual resource and a resource provisioning amount of the first physical resource, where there is at least one first physical resource, and an accumulated amount of the resource provisioning amount of the at least one first physical resource equals the required resource amount; and control, based on the resource provisioning amount of the first physical resource, the first physical resource to provision the first virtual resource.

It should be understood that, when the apparatus provided in FIG. 6 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiments and the method embodiments belong to the same concept. For details of a specific implementation process, refer to the method embodiments. Details are not described herein again.

In addition, in the foregoing resource provisioning apparatus, each module may be implemented by using software or hardware. For example, the following uses the obtaining module 601 as an example to describe an implementation of the obtaining module 601. Similarly, for an implementation of another module, refer to the implementation of the obtaining module 601.

The module is used as an example of a software functional unit, and the obtaining module 601 may include code run on a computing instance. The computing instance may include at least one of a physical host (a computing device), a virtual machine, or a container. Further, there may be one or more computing instances. For example, the obtaining module 601 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

A module is used as an example of a hardware functional unit, and the obtaining module 601 may include at least one computing device. Alternatively, the obtaining module 601 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the obtaining module 601 may be distributed in a same region, or may be distributed in different regions. The plurality of computing devices included in the obtaining module 601 may be distributed in a same AZ, or may be distributed in different AZs. Similarly, the plurality of computing devices included in the obtaining module 601 may be distributed on a same VPC, or may be distributed on a plurality of VPCs. The plurality of computing devices may be any combination of computing devices such as a server, an ASIC, a PLD, a CPLD, an FPGA, and a GAL.

It should be noted that, in another embodiment, the obtaining module 601 may be configured to perform any step in the resource provisioning method, that is, steps implemented by the obtaining module 601 and the another module may be specified as required, and the obtaining module 601 and the another module separately implement different steps in the resource provisioning method to implement all functions of the resource provisioning apparatus.

This application further provides a computing device, which can be configured as the cloud management platform or the physical resource in the foregoing implementation scenario. FIG. 7 is a diagram of a hardware structure of a computing device according to an embodiment of this application. As shown in FIG. 7, the computing device 700 includes a bus 702, a processor 704, a memory 706, and a communication interface 708. The processor 704, the memory 706, and the communication interface 708 communicate with each other through the bus 702. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 702 may include a path for transmitting information between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code, and the processor 704 executes the executable program code to separately implement functions of the obtaining module 601, the determining module 602, or the control module 603, so as to implement the resource provisioning method. In other words, the memory 706 stores instructions that are used for performing the resource provisioning method.

The communication interface 708 is a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be configured as a server in the foregoing implementation environment, for example, a central server, an edge server, or a local server in a local data center.

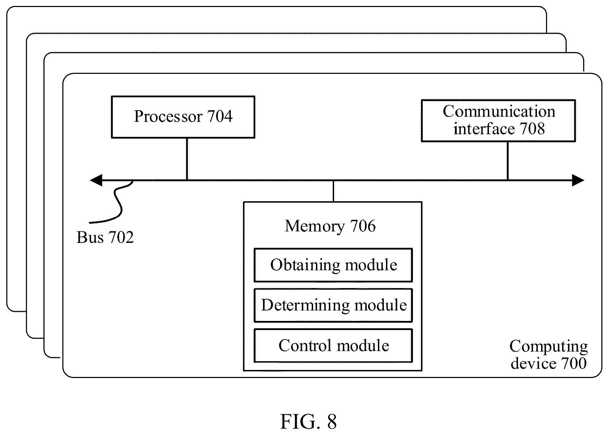

FIG. 8 is a diagram of a structure of a computing device cluster according to an embodiment of this application. As shown in FIG. 8, the computing device cluster includes at least one computing device 700. A memory 706 in one or more computing devices 700 in the computing device cluster may store same instructions that are used for performing the resource provisioning method.

In some possible implementations, the memory 706 in the one or more computing devices 700 in the computing device cluster may alternatively separately store some instructions that are used for performing the resource provisioning method. In other words, a combination of the one or more computing devices 700 may jointly execute the instructions that are used for performing the resource provisioning method.

It should be noted that memories 706 in different computing devices 700 in the computing device cluster may store different instructions, respectively used for performing some functions of the resource provisioning apparatus. In other words, the instructions stored in the memories 706 in different computing devices 700 may implement functions of one or more of the obtaining module 601, the determining module 602, or the control module 603.

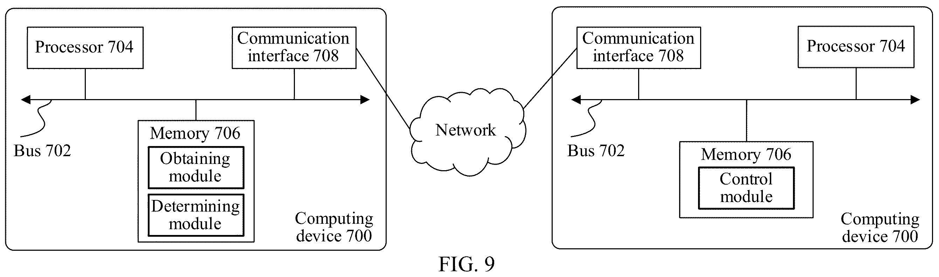

In some embodiments, the one or more computing devices in the computing device cluster may be connected through a network. The network may be a wide area network, a local area network, or the like. FIG. 9 is a diagram of a connection mode of a computing device cluster according to an embodiment of this application. As shown in FIG. 9, two computing devices 700 are connected through a network, specifically, connected to the network through a communication interface in each computing device.

It should be understood that a function of the computing device 700 shown in FIG. 9 may alternatively be completed by a plurality of computing devices 700.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the resource provisioning method.

An embodiment of this application further provides a computer-readable storage medium. The computer-readable storage medium may be any usable medium that can be stored in a computing device, or a data storage device like a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform the resource provisioning method.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid State Disk), or the like.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of second devices means two or more second devices. The terms "system" and "network" are often used interchangeably in this specification.

It should be understood that the terms used in the descriptions of the various examples in this specification are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the terms "if" and "assuming that" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, all or a part of embodiments may be implemented in a form of program structure information. The program structure information includes one or more program instructions. When the program instructions are loaded and executed on a computing device, the procedures or functions according to embodiments of this application are all or partially generated.

A person of ordinary skill in the art may understand that all or some of the steps of embodiments may be implemented by hardware or a program instructing related hardware. The program may be stored in a computer-readable storage medium. The storage medium mentioned above may be a read-only memory, a magnetic disk, or an optical disc.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, the request and the resource involved in this application are obtained in a case of full authorization.

Finally, it should be noted that the foregoing embodiments are intended merely for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to a part of technical features thereof, without departing from the protection scope of the technical solutions of embodiments of this application.

## Claims

1. A resource provisioning method, wherein the method is applied to a cloud management platform, the cloud management platform is configured to manage a plurality of physical resources, and the method comprises:
obtaining a first resource request, wherein the first resource request comprises a first resource type of a first virtual resource that is requested to be provisioned;
determining, from the plurality of physical resources, at least one physical resource on which a virtual resource of the first resource type is deployed;
obtaining a provisioning priority of the at least one physical resource for the virtual resource of the first resource type, wherein the provisioning priority indicates a provisioning sequence of the at least one physical resource for the virtual resource of the first resource type; and
controlling, based on the provisioning priority, the at least one physical resource to provision the first virtual resource.

2. The method according to claim 1, wherein a provisioning priority of any physical resource in the at least one physical resource for the virtual resource of the first resource type is determined based on at least one of a provisioning benefit or a remaining capacity of the any physical resource, the provisioning benefit of the any physical resource is a benefit of provisioning the virtual resource of the first resource type by the any physical resource, and the remaining capacity of the any physical resource is an amount of the any physical resource still available for provisioning the virtual resource of the first resource type.

3. The method according to claim 2, wherein the provisioning priority of the any physical resource for the virtual resource of the first resource type is positively correlated with the provisioning benefit of the any physical resource; and the provisioning priority of the any physical resource for the virtual resource of the first resource type is positively correlated with the amount of the remaining capacity of the any physical resource, or the provisioning priority of the any physical resource for the virtual resource of the first resource type is positively correlated with a remaining capacity proportion of the any physical resource, wherein the remaining capacity proportion of the any physical resource is a proportion of the remaining capacity of the any physical resource used for provisioning the virtual resource of the first resource type to a total capacity.

4. The method according to claim 2 or 3, wherein the provisioning benefit of the any physical resource comprises a difference between a first reward resource from provisioning the virtual resource of the first resource type by the any physical resource and a cost loss, and the remaining capacity of the any physical resource equals a difference between the total capacity used by the any physical resource to provision the virtual resource of the first resource type and a capacity already used.

5. The method according to any one of claims 1 to 4, wherein before the determining, from the plurality of physical resources, the at least one physical resource on which the virtual resource of the first resource type is deployed, the method further comprises:
determining a mapping relationship between the plurality of physical resources and a resource type of a virtual resource deployed on the plurality of physical resources; and
the determining, from the plurality of physical resources, the at least one physical resource on which the virtual resource of the first resource type is deployed comprises:
determining the at least one physical resource from the plurality of physical resources based on the mapping relationship and the first resource type.

6. The method according to any one of claims 1 to 5, wherein the first resource request further comprises a required resource amount of the first virtual resource, and the controlling, based on the provisioning priority, the at least one physical resource to provision the first virtual resource comprises:
determining, based on the provisioning priority, the required resource amount of the first virtual resource, and the remaining capacity of the at least one physical resource used for provisioning the virtual resource of the first resource type, a first physical resource used for provisioning the first virtual resource and a resource provisioning amount of the first physical resource, wherein there is at least one first physical resource, and an accumulated amount of the resource provisioning amount of the at least one first physical resource equals the required resource amount; and
controlling, based on the resource provisioning amount of the first physical resource, the first physical resource to provision the first virtual resource.

7. A resource provisioning apparatus, wherein the apparatus is used in a cloud management platform, the cloud management platform is configured to manage a plurality of physical resources, and the apparatus comprises:
an obtaining module, configured to obtain a first resource request, wherein the first resource request comprises a first resource type of a first virtual resource that is requested to be provisioned;
a determining module, configured to determine, from the plurality of physical resources, at least one physical resource on which a virtual resource of the first resource type is deployed, wherein
the obtaining module is further configured to obtain a provisioning priority of the at least one physical resource for the virtual resource of the first resource type, wherein the provisioning priority indicates a provisioning sequence of the at least one physical resource for the virtual resource of the first resource type; and
a control module, configured to control, based on the provisioning priority, the at least one physical resource to provision the first virtual resource.

8. The apparatus according to claim 7, wherein a provisioning priority of any physical resource in the at least one physical resource for the virtual resource of the first resource type is determined based on at least one of a provisioning benefit or a remaining capacity of the any physical resource, the provisioning benefit of the any physical resource is a benefit of provisioning the virtual resource of the first resource type by the any physical resource, and the remaining capacity of the any physical resource is an amount of the any physical resource still available for provisioning the virtual resource of the first resource type.

9. The apparatus according to claim 8, wherein the provisioning priority of the any physical resource for the virtual resource of the first resource type is positively correlated with the provisioning benefit of the any physical resource; and the provisioning priority of the any physical resource for the virtual resource of the first resource type is positively correlated with the amount of the remaining capacity of the any physical resource, or the provisioning priority of the any physical resource for the virtual resource of the first resource type is positively correlated with a remaining capacity proportion of the any physical resource, wherein the remaining capacity proportion of the any physical resource is a proportion of the remaining capacity of the any physical resource used for provisioning the virtual resource of the first resource type to a total capacity.

10. The apparatus according to claim 8 or 9, wherein the provisioning benefit of the any physical resource comprises a difference between a first reward resource from provisioning the virtual resource of the first resource type by the any physical resource and a cost loss, and the remaining capacity of the any physical resource equals a difference between the total capacity used by the any physical resource to provision the virtual resource of the first resource type and a capacity already used.

11. The apparatus according to any one of claims 7 to 10, wherein the determining module is further configured to determine a mapping relationship between the plurality of physical resources and a resource type of a virtual resource deployed on the plurality of physical resources; and the determining module is configured to determine the at least one physical resource from the plurality of physical resources based on the mapping relationship and the first resource type.

12. The apparatus according to any one of claims 7 to 11, wherein the first resource request further comprises a required resource amount of the first virtual resource, and the control module is configured to: determine, based on the provisioning priority, the required resource amount of the first virtual resource, and the remaining capacity of the at least one physical resource used for provisioning the virtual resource of the first resource type, a first physical resource used for provisioning the first virtual resource and a resource provisioning amount of the first physical resource, wherein there is at least one first physical resource, and an accumulated amount of the resource provisioning amount of the at least one first physical resource equals the required resource amount; and control, based on the resource provisioning amount of the first physical resource, the first physical resource to provision the first virtual resource.

13. A computing device cluster, wherein the computing device cluster comprises at least one computing device, each computing device comprises a processor, and the processor is coupled to a memory; and the processor of the at least one computing device is configured to execute instructions stored in the memory of the at least one computing device, to enable the computing device cluster to perform the resource provisioning method according to any one of claims 1 to 6.

14. A computer program product comprising instructions, wherein when the instructions are run by a computing device cluster, the computing device cluster is enabled to perform the resource provisioning method according to any one of claims 1 to 6.

15. A computer-readable storage medium, comprising computer program instructions, wherein when the computer program instructions are executed by a computing device cluster, the computing device cluster performs the resource provisioning method according to any one of claims 1 to 6.
